Europäisches Patentamt

European Patent Office

Office européen des brevets

(19)

(11) Veröffentlichungsnummer : **0 102 467**
**B1**

(12) **EUROPÄISCHE PATENTSCHRIFT**

(45) Veröffentlichungstag der Patentschrift :
25.03.87

(51) Int. Cl.⁴ : **B 01 J 20/20**

(21) Anmeldenummer : 83106264.1

(22) Anmeldetag : 28.06.83

(54) Verfahren zur Herstellung von mit Elementarschwefel imprägnierten kohlenstoffhaltigen Adsorptionsmitteln.

(30) Priorität : 06.08.82 DE 3229396

(43) Veröffentlichungstag der Anmeldung :
14.03.84 Patentblatt 84/11

(45) Bekanntmachung des Hinweises auf die Patenterteilung : 25.03.87 Patentblatt 87/13

(84) Benannte Vertragsstaaten :
BE DE FR GB NL

(56) Entgegenhaltungen :
EP-A- 0 000 214
FR-A- 2 253 815
US-A- 2 447 004
US-A- 2 829 115

(73) Patentinhaber : Bergwerksverband GmbH
Franz-Fischer-Weg 61
D-4300 Essen 13 (DE)

(72) Erfinder : Degel, Josef, Dipl.-Ing.
Am Kronenberg 3
D-4320 Hattingen 16 (DE)
Erfinder : Henning, Klaus-Dirk, Ing. Grad.
Am Kirchhof 29
D-4300 Essen 17 (DE)
Erfinder : Klein, Jürgen, Dr., Dipl.-Phys.
Hülscherfeld 32
D-4300 Essen 14 (DE)
Erfinder : Wybrands, Klaus, Dr. Dipl.-Ing.
Brenscheider Strasse 81
D-4630 Bochum 1 (DE)

# 0 102 467

**Beschreibung**

Die Erfindung betrifft ein Verfahren zur Herstellung von mit Elementarschwefel imprägnierten kohlenstoffhaltigen Adsorptionsmitteln, bei dem das kohlenstoffhaltige Ausgangsmaterial mit Elementarschwefel bei Temperaturen von 120-500 °C gemischt und das Gemisch anschließend abgekühlt wird.

Zur Entfernung von schädlichen oder sogar giftigen Stoffen, wie beispielsweise Quecksilber aus Abgasen, z. B. aus der Raumluft von Laboratorien, in denen mit Quecksilber gearbeitet wird, werden in der Regel Aktivkohlen verwendet, die mit Quecksilber bindenden Stoffen imprägniert sind. Insbesondere verwendet man dafür mit elementarem Jod imprägnierte Aktivkohlen. Solche Aktivkohlen werden erhalten, indem man sie mit Schwefelsäure und Kaliumjodid imprägniert. Außerdem ist bekannt, daß sich mit Elementarschwefel imprägnierte Aktivkohlen für die Entfernung von Quecksilberdämpfen aus Luft oder anderen Gasen besonders gut eignen (Chemical Engineering Progress Vol. 70 (1974), Seite 45).

Die Herstellung von imprägnierten Aktivkohlen geschieht in der Regel durch ein Tränkverfahren, bei dem die gewünschten Gehalte an aufzubringendem Stoff durch die Konzentration der Tränklösung und die Anzahl der Tränkvorgänge eingestellt werden. Auf diese Weise lassen sich im allgemeinen nicht mehr als 10-12 Gew.-% vom gewünschten Stoff aufbringen. Metallische Stoffe lassen sich andererseits auch schon vor oder während der Aktivierungsbehandlung auf die Kohle aufbringen.

Eine Einarbeitung von Elementarschwefel bei der Aktivkohleherstellung ist dagegen nicht möglich, da sich der Schwefel bei den Temperaturen der Aktivierung von 800-900 °C verflüchtigt, oder, soweit er dies nicht getan hat, bei der Wasserdampfaktivierung in Schwefelwasserstoff umgewandelt wird.

In der EP-A-0 000 214 wird ein Verfahren zur Herstellung eines festen, Kohlenstoff enthaltenden Materials mit einer Sorptionskapazität für Metallionen offenbart, bei dem das kohlenstoffhaltige Ausgangsmaterial mit Schwefel gemischt, die Mischung einige Stunden auf 120-500 °C erhitzt, das Gemisch abgekühlt und mit einer wässrigen Lösung eines Alkalimetallhydroxyds bei einer Temperatur von nicht höher als 200 °C behandelt wird. Anschließend erfolgt noch eine Wäsche mit Schwefelsäure und Wasser. Auf diese Weise wird ein kohlenstoffhaltiges Material mit chemisch gebundenen Schwefelgruppen erzeugt, das Ionenaustauscheigenschaften besitzt. Der chemisch nicht gebundene Schwefel wird durch die Behandlung mit der wässrigen Lösung des Alkalihydroxyds (z. B. Natronlauge) herausgelöst. Das fertige Produkt enthält somit keinen Elementarschwefel.

Aus der US-A-2 829 115 ist ein Verfahren zur Herstellung von Aktivkohle mit hoher Dichte, großer Partikelgröße und Adsorptionskapazität bekannt. Bei der Herstellung der Aktivkohle wird elementarer Schwefel zugesetzt der als Gleitmittel wirken soll. Bei der anschließenden Aktivierung bei ungefähr 1 000 °C verflüchtigt sich der Schwefel und wird bei der Aktivierung mit $CO_2$ hauptsächlich als Kohlenoxysulfid freigesetzt. Die hergestellte Aktivkohle enthält somit keinen Elementarschwefel.

Die FR-A-2 253 815 betrifft ein Verfahren zur Herstellung granulierter, unlöslicher, schwefelhaltiger Massen, granulierter Kohle oder granulierter Aktivkohle. Bei diesem Verfahren findet eine chemische Umsetzung des Schwefels mit den aus Erdöl erhaltenen hochmolekularen, kohlenwasserstoffhaltigen Produkten statt. Der Schwefel wird chemisch gebunden oder als Schwefelwasserstoff abgespalten. Es ist somit kein Elementarschwefel vorhanden. Soll eine Aktivkohle hergestellt werden, muß die Masse bei Temperaturen von 700-1 100 °C erhitzt und mit Wasserdampf aktiviert werden. Dabei setzt sich der gebundene Schwefel zu Schwefelwasserstoff und Schwefeldioxid um.

Bei der Anwendung des Tränkverfahrens für die Beladung mit Elementarschwefel, muß der Schwefel in einem geeigneten Lösungsmittel gelöst werden, mit dem die Aktivkohle getränkt wird, und das anschließend wieder verdampft werden muß. Hierfür gibt es zwar geeignete Lösungsmittel, jedoch ist bei allen das Tränkwiegenden Nachteilen verbunden.

Elementarschwefel löst sich u. a. in einer Ammoniumpolysulfid-Lösung oder in organischen Lösungsmitteln, wie Schwefelkohlenstoff, Benzol, Toluol und Alkoholen. Eine Tränkung mit einer Polysulfid-Lösung scheidet schon aus Gründen des Umweltschutzes aus, da erhebliche Abluft- und Abwasserprobleme entstehen. Bei der Tränkung mit in organischen Lösungsmitteln gelösten Schwefel, ist nach dem Tränken das Lösungsmittel wieder zu verdampfen. Da Aktivkohlen aber neben dem Schwefel gleichzeitig 50-100 Gew.-% des Lösungsmittels adsorbieren, sind zur Desorption und Entfernung des Lösungsmittels erhebliche Wärmemengen erforderlich. Außerdem sind zum Aufbringen von 20-30 Gew.-% Schwefel mindestens 2-3 Tränkvorgänge erforderlich.

Eine weitere Möglichkeit zur Aufbringung von Schwefel auf eine Aktivkohle besteht bei einer katalytischen $H_2S$-Oxidation von $H_2S$-haltigen Gasen in einem Aktivkohle enthaltenden Reaktor. Ein solches Verfahren ist jedoch sehr aufwendig und erzielt keine gleichmäßige Schwefelbeladung auf der Aktivkohle. Die gleichen Nachteile treten auch auf, wenn Schwefel aus einem damit beladenen Gasstrom, der über Aktivkohle geleitet wird, direkt durch Adsorption abgeschieden werden soll. Bedingt durch den niedrigen Dampfdruck des Schwefels (bei 200 °C nur 0,02 kg S/m³ Gas) müßte ein solches Verfahren bei Temperaturen über 200 °C durchgeführt werden.

Der Erfindung liegt daher die Aufgabe zugrunde, die Imprägnierung von kohlenstoffhaltigen Adsorptionsmitteln mit einem gewünschten Schwefelgehalt zu vereinfachen und Adsorptionsmittel mit einer gleichmäßigen Imprägnierung mit Elementarschwefel herzustellen.

Diese Aufgabe wird bei einem Verfahren der eingangs genannten Gattung erfindungsgemäß dadurch

2

gelöst, daß man als Adsorptionsmittel solche mit einer BET-Oberfläche von 40 bis 1 300 m²/g und einem Makroporenvolumen von 20-80 cm³/100 g verwendet, das Adsorptionsmittel mit Elementarschwefel mischt und in ruhender oder bewegter Schüttung auf Temperaturen von 120 bis 300 °C erhitzt und diese Temperatur für die Dauer von 1 bis 40 Stunden hält, worauf das Gemisch abgekühlt wird. Besonders geeignet sind Aktivkohlen mit diesen Eigenschaften. Diese können beispielsweise aus Holz, Torf oder Steinkohle hergestellt sein. Auch Kokse lassen sich mit dem erfindungsgemäßen Verfahren mit Schwefel imprägnieren.

Es wurde nämlich gefunden, daß es auf überraschend einfache Weise gelingt, kohlenstoffhaltige Adsorptionsmittel mit Elementarschwefel gleichmäßig zu imprägnieren. Dieses Ergebnis ist schon deshalb so überraschend, weil der Dampfdruck des Schwefels bei einer mittleren Arbeitstemperatur von etwa 150 °C nur etwa 0,002 kg S/m³ beträgt.

Es werden mit dem erfindungsgemäßen Verfahren gute Ergebnisse, unabhängig von der Art des kohlenstoffhaltigen Adsorptionsmittels, beispielsweise ob Aktivkohle oder Adsorptionskoks, und unabhängig von den Korngrößen, Mischungsverhältnissen und Betriebstemperaturen oder Betriebszeiten, erhalten. Ein sich in einem geschlossenen Reaktor bei der thermischen Behandlung einstellender Druck hat auf den Prozeß keinen Einfluß. Es empfiehlt sich jedoch, die Imprägnierung aus Umweltschutzgründen in einem geschlossenen Druckgefäß durchzuführen.

Das Mischungsverhältnis der kohlenstoffhaltigen Adsorptionsmittel und Elementarschwefel kann in weiten Grenzen schwanken. Beispielsweise zwischen 1 : 0,02 und 1 : 0,55.

Es lassen sich Schwefelgehalte der Adsorptionsmittel von etwa 2 bis 35 Gew.-% hierbei erzielen.

Die Korngröße der kohlenstoffhaltigen Adsorptionsmittel kann zwischen pulverförmig bis zu Formlingen von etwa 4 mm variieren. Aber auch ein Granulat von 1-4 mm ist für die Imprägnierung geeignet. Hierbei sind Korngröße und Kornverteilung ohne Einfluß auf den Erfolg der Imprägnierung.

Die Dauer der Wärmebehandlung kann zwischen 1 und 40 h betragen und mit Temperaturen zwischen 120 und 300 °C durchgeführt werden.

Die erfindungsgemäß mit Elementarschwefel imprägnierten kohlenstoffhaltigen Adsorptionsmittel sind äußerlich nicht von den unbehandelten zu unterscheiden. Untersuchungen haben ergeben, daß der Elementarschwefel ausschließlich auf der inneren Oberfläche der Adsorptionsmittel adsorbiert vorliegt.

Die thermische Behandlung des Gemisches aus kohlenstoffhaltigem Adsorptionsmittel und Elementarschwefel kann in jeder Art von Reaktoren durchgeführt werden. Beispielsweise sind sowohl Festbett-, als auch Wanderschicht- oder Wirbelschichtreaktoren geeignet. Auch in einem Drehrohrofen kann die thermische Behandlung durchgeführt werden.

Mit dem erfindungsgemäßen Verfahren, das in den Ausführungsbeispielen noch näher erläutert ist, gelingt es überraschenderweise, auf einfache Art kohlenstoffhaltige Adsorptionsmittel, insbesondere Aktivkohlen, völlig gleichmäßig mit genau festgelegten Mengen an Elementarschwefel zu imprägnieren. Ein besonderer Vorteil des Verfahrens ist der geringe Energiebedarf und die völlige Vermeidung von Umweltproblemen bei der Imprägnierung. Außerdem ist es möglich, unter den Bedingungen des erfindungsgemäßen Verfahrens auf kohlenstoffhaltigen Adsorptionsmitteln auch andere Stoffe, seien es Elemente oder Verbindungen, in der gewünschten Menge aufzubringen.

Ausgangsmaterialien für die in den folgenden Beispielen hergestellten imprägnierten Adsorptionsmittel sind :

| Nr. | Bezeichnung | Ausgangs-material | Korngröße [mm] | Porenvolumen [cm³/100 g] <10mm | >10mm | BET-Oberfläche [m²/g] |
|---|---|---|---|---|---|---|
| 1 | Aktivkohle | Steinkohle | 3 mm Formling | 40 | 41 | 1.000 |
| 2 | Aktivkohle | Steinkohle | 4 mm Formling | 65 | 76 | 1.290 |
| 3 | Aktivkohle | Holz | <100 μm Pulver | 21 | – | 514 |
| 4 | Aktivkohle | Torf | 3 mm Formling | 54 | 48 | 1.130 |

(Fortsetzung)

| Nr. | Bezeichnung | Ausgangs-material | Korngröße [mm] | Porenvolumen [cm³/100 g] | | BET-Oberfläche [m²/g] |
|---|---|---|---|---|---|---|
| | | | | <10mm | >10mm | |
| 5 | Aktivkoks | Steinkohle | 1-3 mm Granulat | 2 | 20 | 40 |

### Beispiel 1

2,35 kg der Aktivkohle Nr. 1 werden mit 0,8 kg Schwefel gemischt und in einem 10 l-Autoklaven 10 h bei 200 °C stehen gelassen. Der Druck im Autoklaven steigt auf 4 bar. Nach 10 h wird abgekühlt und die Aktivkohle dem Autoklaven entnommen.

Die Aktivkohle zeigt auf der äußeren Oberfläche keine Schwefelreste mehr. Schwefelbestimmungen an Proben, die an horizontal und vertikal unterschiedlichen Stellen gezogen werden, bestätigen eine homogene Schwefelverteilung von 24-26 % Schwefel.

### Beispiel 2

2,35 kg der Aktivkohle Nr. 2 werden mit 1,2 kg Schwefel gemischt und in einem 10 l-Autoklaven bei 130 °C 40 h stehen gelassen. Im Gegensatz zu Beispiel 1 wird jedoch in der Aufheizphase das Ventil des Autoklaven geöffnet, so daß die von der Aktivkohle desorbierten Gase entweichen können. Es wird kein weiterer Druckanstieg gemessen. Auch in diesem Fall ist der Schwefel völlig homogen auf der inneren Aktivkohleoberfläche verteilt, und es werden Schwefelgehalte von 32-34 Gew.-% erhalten.

### Beispiel 3

2,35 kg der Aktivkohle Nr. 3 werden, wie im Beispiel 2 beschrieben, mit 0,26 kg Schwefel gemischt und weiterbehandelt. Es wird auch in diesem Fall ein Produkt mit einem homogen verteilten Schwefelgehalt von 9-10 Gew.-% erhalten.

### Beispiel 4

15,5 kg der Aktivkohle Nr. 4 werden mit 4,4 kg Schwefel in einem Drehrohrofen gemischt und 1 h auf 270 °C erhizt. Es wird ein gleichmäßiges Produkt mit einem Schwefelgehalt von 21 Gew.-% erhalten.

### Beispiel 5

21 kg des Aktivkokses Nr. 5 werden im Drehrohrofen mit 1 kg Schwefel gemischt und auf 220 °C aufgeheizt und 3 h bei dieser Temperatur belassen. In verschieden gezogenen Proben werden dann Schwefelgehalte von 4-5 Gew.-% erhalten.

## Patentansprüche

1. Verfahren zur Herstellung von mit Elementarschwefel imprägnierten kohlenstoffhaltigen Adsorptionsmitteln, bei dem das kohlenstoffhaltige Ausgangsmaterial mit Elementarschwefel bei Temperaturen von 120-500 °C gemischt und das Gemisch anschließend abgekühlt wird, dadurch gekennzeichnet, daß man als Adsorptionsmittel solche mit einer BET-Oberfläche von 40 bis 1 300 m²/g und einem Makroporenvolumen von 20 bis 80 cm³/100 g verwendet, das Adsorptionsmittel mit Elementarschwefel mischt und in ruhender oder bewegter Schüttung auf Temperaturen von 120 bis 300 °C erhitzt und diese Temperatur für die Dauer von 1 bis 40 Stunden hält, worauf das Gemisch abgekühlt wird.

2. Verfahren nach Anspruch 1, dadurch gekennzeichnet, daß man die Adsorptionsmittel und Elementarschwefel im Mischungsverhältnis 1 : 0,02 bis 1 : 0,55 mischt.

3. Verfahren nach Anspruch 1 und 2, dadurch gekennzeichnet, daß man die thermische Behandlung unter Druck ausführt.

4

### Claims

1. A process for the preparation of carbonaceous adsorbents impregnated with elementary sulphur, in which the carbonaceous base material is mixed with elementary sulphur at temperatures of 120-500 °C and the mixture is then cooled, characterised in that as adsorbents, adsorbents are used with a BET-surface of 40 to 1 300 $m^2$/g and macropore volumes of 20 to 80 $cm^3$/100 g, the adsorbent agent is mixed with elementary sulphur and heated in static or moving bulk to temperatures of 120 to 200 °C and this temperature is maintained for a period of 1 to 40 hours, whereupon the mixture is cooled.

2. A process according to claim 1, characterised in that the adsorbents and elementary sulphur are mixed in the mixing ratio 1 : 0.02 to 1 : 0.55.

3. A method according to claim 1 and 2, characterised in that the thermal treatment is carried out under pressure.

### Revendications

1. Procédé de préparation d'adsorbants carbonés, imprégnés de soufre élémentaire, dans lequel la matière carbonée de départ est mélangée entre 120 et 500 °C avec du soufre élémentaire, puis le mélange est refroidi, caractérisé en ce que l'on emploie comme absorbant un matériau possédant une surface selon BET comprise entre 40 et 1 300 $m^2$/g et un volume des macropores compris entre 20 et 80 $cm^3$/100 g, on mélange l'adsorbant et le soufre élémentaire, on porte le mélange en vrac, en lit fixe ou agité, à des températures comprises entre 120 et 300 °C, on maintient la température choisie pendant une à quarante heures, puis on refroidit le mélange.

2. Procédé suivant la revendication 1, caractérisé en ce que l'adsorbant et le soufre élémentaire sont mélangés en des proportions pondérales comprises entre 1 : 0,02 et 1 : 0,55.

3. Procédé suivant la revendication 1 et la revendication 2, caractérisé en ce que le traitement thermique est réalisé sous pression.